Europäisches Patentamt

European Patent Office

Office européen des brevets

(11) Veröffentlichungsnummer: **0 203 542**
**A2**

## (12) EUROPÄISCHE PATENTANMELDUNG

(21) Anmeldenummer: 86106996.1

(22) Anmeldetag: 23.05.86

(51) Int. Cl.⁴: **G07F 7/08**

(30) Priorität: 31.05.85 DE 3519637

(43) Veröffentlichungstag der Anmeldung:
03.12.86 Patentblatt 86/49

(84) Benannte Vertragsstaaten:
DE FR GB IT SE

(71) Anmelder: **Siemens Aktiengesellschaft Berlin und München**
**Wittelsbacherplatz 2**
**D-8000 München 2(DE)**

(72) Erfinder: **Krivachy, Thomas, Dr.Phil.**
**Buchauerstrasse 39**
**D-8000 München 71(DE)**

(54) **Verfahren und Anordung zum Überprüfen von Chipkarten.**

(57) Die Überprüfung von Chipkarten (CK) hinsichtlich der Berechtigung des Zugangs zu einem Chipkartensystem erfolgt in einer Zentralstelle (Z), zu der von der Chipkarte (CK) über ein Endgerät (E) Daten übertragen werden. Die Überprüfung erfolgt nicht bei jeder Benutzung der Chipkarte (CK), sondern im Endgerät (E) wird geprüft, ob ein bestimmter Übertragungswert (W) überschritten wird und nur in diesem Fall werden die Daten von der Chipkarte -(CK) zur Zentralstelle (Z) übertragen und dort wird in einer Sperrdatei die Berechtigung des Zugangs zum Chipkartensystem überprüft. Falls der Übertragungswert (W) nicht überschritten wird, kann der Chipkarte (CK) wieder die Verfügbarkeit über den vollen vorgegebenen Übertragungswert (W) mitgeteilt werden. Der Übertragungswert (W) kann einen bestimmten Geldbetrag, eine bestimmte Zeitdauer oder eine bestimmte Anzahl der Benutzungen beinhalten.

Verfahren und Anordnung zum Überprüfen von Chipkarten

Die Erfindung bezieht sich auf ein Verfahren zum Überprüfen von Chipkarten entsprechend dem Oberbegriff des Patentanspruchs 1. Weiterhin bezieht sich die Erfindung auf eine Anordnung zur Durchführung des Verfahrens.

Es ist bereits allgemein bekannt, Chipkarten als elektronisches Zahlungsmittel zu verwenden. Die Chipkarten werden beispielsweise an sogenannten POS (Point of Sales)-Endgeräten oder an öffentlichen Kartentelefonen benutzt. Die Chipkarten enthalten mindestens einen integrierten Schaltkreis, der als Speicherschaltkreis und/oder als Schaltkreis mit Logikfunktionen, beispielsweise als Mikrorechner ausgebildet sein kann.

Zur Überprüfung der Berechtigung des Zugangs zu einem Chipkartensystem ist es denkbar, im Endgerät eine Sperrdatei zu speichern und nach dem Lesen von Daten von der Chipkarte diese mittels einer Sperrdatei zu vergleichen, um die Chipkarte für die Benutzung freizugeben oder zu sperren. Bei einem derartigen Verfahren muß in jedem Endgerät eine vollständige Sperrdatei vorhanden sein, um die Chipkarten von allen möglichen Benutzern überprüfen zu können. Bei einer starken Verbreitung der Chipkarte wird die in jedem Endgerät notwendige Sperrdatei sehr groß und teuer. Auch wenn die Sperrdatei nur die Daten der zu sperrenden Chipkarten enthält, erfordert sie einen großen Aufwand.

Es wäre auch denkbar, die Sperrdatei in einer Zentralstelle zu speichern und bei jeder Benutzung der Chipkarte die gelesenen Daten zur Zentralstelle zu übertragen, um diese in der Sperrdatei zu überprüfen. In diesem Fall wäre eine Sperrdatei im Endgerät unter Umständen nicht erforderlich. Es treten in diesem Fall jedoch erhebliche Netzbelastungen auf, da bei jeder Benutzung die von der Chipkarte zur Zentralstelle übertragenen Daten in der Sperrdatei überprüft werden müssen. Weiterhin fallen Gebühren an, die vom Systemanbieter zu tragen sind oder von ihm ganz oder teilweise auf die Kunden umgelegt werden.

Der Erfindung liegt daher die Aufgabe zugrunde, ein Verfahren und eine Anordnung anzugeben, bei deren Verwendung Chipkarten von einer Vielzahl von Teilnehmern auf einfache Weise überprüft werden können.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß nur geringe Netzbelastungen auftreten, da nicht bei jeder Benutzung der Chipkarte Daten zur Zentralstelle übertragen werden. Damit wird die Belastung mit Gebühren auch entsprechend niedrig gehalten. Es wird nicht jede Benutzung der Chipkarte unabhängig von der Belastung in der Sperrdatei der Zentralstelle geprüft, sondern es wird eine belastungsabhängige Prüfung in der Sperrdatei durchgeführt. In der Chipkarte werden die für mehrere Nutzungen anfallenden Belastungen in einem besonderen Speicherbereich summiert und erst nach Erreichen eines vom Systemanbieter vorgegebenen Übertragungswert wird die Prüfung in der Sperrdatei vorgenommen. Zur Zentralstelle können nur der Gesamtbetrag, alle Einzelbeträge, der Gesamtbetrag und gewisse systemvorgegebene Einzelwerte übertragen werden. Um Mißbrauch durch den Kunden auszuschließen, werden die einzelnen Belastungen in einem besonderen Speicherbereich abgelegt, der vom Kunden nicht gelöscht oder geändert werden kann.

Wenn der vorgegebene Übertragungswert erreicht wird, wird dieser Betrag zur Zentralstelle übertragen und die Chipkarte in der Sperrdatei geprüft. Bei einer Negativprüfung, d. h. daß die Chipkarte nicht gesperrt ist, wird von der Zentralstelle der Chipkarte die erneute Verfügbarkeit über den gesamten Übertragungswert gemeldet.

Der vorgegebene Übertragungswert kann einem bestimmten Geldbetrag zugeordnet sein, oder aber auch einer bestimmten Zeitdauer und/oder einer bestimmten Anzahl von Benutzungen der Chipkarte als elektronisches Zahlungsmittel, beispielsweise fünf Buchungsvorgängen. In einer erfindungsgemäßen Variante muß der Übertragungswert nicht fest sein, sondern er kann in einem gewissen Bereich veränderbar sein. Beispielsweise kann der Übertragungswert 90 bis 100 Einheiten anstatt 100 Einheiten bei einem öffentlichen Chipkartentelefon betragen. Diese Variante hat zur Folge, daß im Fall einer Meldung der erneuten Verfügbarkeit des Übertragungswerts auch 110 Einheiten nach obigem Beispiel angezeigt und als gültig erkannt werden müssen.

Zur Erhöhung der Sicherheit ist es auch möglich, auf der Chipkarte die erneute Verfügbarkeit über den vollen vorgegebenen Übertragungswert erst nach der Quittierung durch den Benutzer einzuspeichern. Die elektronische Unterschrift bietet dem Benutzer die zusätzliche

Sicherheit, daß die erneute Verfügbarkeit des Übertragungswerts nur dann in der Sperrdatei freigegeben wird, wenn er elektronisch unterschrieben hat.

Für die Übertragung der Daten zwischen der Chipkarte und der Zentralstelle ist es vorteilhaft, wenn diese verschlüsselt erfolgt. Hierzu eignen sich beispielsweise public key Verfahren, die allgemein bekannt sind.

Es ist auch möglich, nach jeder Sperrdateiprüfung den Übertragungswert für eine neue Sperrdateiprüfung zu verändern. Beispielsweise kann eine Chipkarte zuerst nach Erreichen eines vorgegebenen Geldbetrags in der Sperrdatei überprüft werden und erhält dann die Kennung, nach Ablauf einer bestimmten Zeit geprüft zu werden.

Eine Anordnung zur Durchführung des Verfahrens ist in vorteilhafter Weise derart ausgebildet, daß im Endgerät eine erste Prüfstufe vorgesehen ist, die nach dem Überschreibt des vorgegebenen Übertragungswerts Daten von der Chipkarte zu einer zweiten Prüfstufe in der Zentralstelle überträgt, die die Berechtigung der Benutzung der Chipkarte überprüft und die über das Endgerät die Chipkarte sperrt, wenn der vorgegebene Übertragungswert überschritten wurde.

Zur verschlüsselten Übertragung der Daten zwichen der Chipkarte und der Zentralstelle ist es vorteilhaft, wenn sowohl in der Zentralstelle als auch in dem Endgerät Schlüsselgeräte vorgesehen sind, die die übertragenen Daten verschlüsseln und entschlüsseln.

Im folgenden wird die Durchführung des Verfahrens gemäß der Erfindung anhand einer Anordnung näher beschrieben.

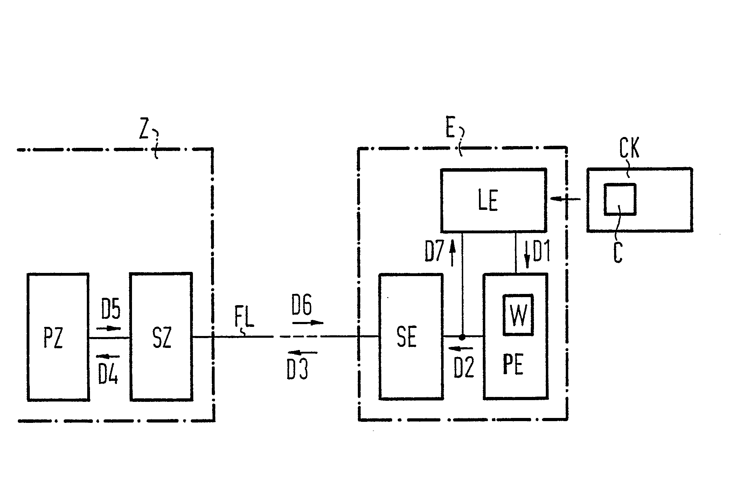

Die Figur zeigt ein Blockschaltbild eines Chipkartensystems mit einer Zentralstelle, einem mit dieser verbundenen Endgerät zum Lesen und Beschreiben einer Chipkarte.

Die Chipkarte CK ist in bekannter Weise mit einem elektronischen Schaltkreis C versehen, der als Speicherschaltkreis und/oder als Schaltkreis mit Logikfunktionen, beispielsweise als Mikrorechner ausgebildet ist. Ein Endgerät E enthält eine Leseeinheit LE, mittels der das Chipkartensystem mit der Chipkarte CK in Verbindung treten kann. Nach dem Einführen der Chipkarte CK in die Leseeinheit LE werden von der Chipkarte CK Daten gelesen und als Datensignale DI einer ersten Prüfstufe PE des Endgeräts E zugeführt. In der Prüfstufe PE ist mindestens ein Übertragungswert W gespeichert, mit dem die von der Chipkarte CK gelesenen Daten verglichen werden. Wenn durch die Chipkarte CK deer vorgegebene Übertragungswert W überschritten wird, werden die Daten als Datensignale D2 an ein Schlüsselgerät SE abgegben, das die Daten verschlüsselt und als Datensignale D3 über eine Fernleitung FL zu einer Zentralstelle Z überträgt. In der Zentralstelle Z ist ein weiteres Schlüsselgerät SZ vorgesehen, das die Darensignale D3 entschlüsselt und als Datensignale D4 an eine Prüfstufe PZ abgibt. Die abgibt. Die prüfstufe PZ prüft nun, ob infolge des Überschreitens des Übertragungswerts W die Chipkarte Ck gesperrt werden soll oder nicht. Falls dies erflogen soll, gibt die Prüfstufe PZ Datensignale D5 über des Schlüsselgerät SZ und die Fernleitung FL als Datensignale D6 an das Endgerät ab. Dort werden die Daten wieder entschlüsselt und als Datensignale D7 der Leseeinheit LE zugeführt und die Leseeinheit LE eingeführte Chipkarte CK wird durch Einspeichern vorgegebener Daten gesperrt.

Falls die Chipkerte CK nicht gesperrt werden muß, wird durch die Datensignale D5 bis D6 in die Chipkarte CK wieder die Verfügbarkeit über den Übertragungswert W eingespeichert.

Falls eine Verschlüsselung der Daten auf der Fernleitung FL nicht erforderlich ist, sind in dem Endgerät E und in der Zentralstelle Z die Schlüsselgeräte SE bzw. SZ nicht vorhanden. Die Verschlüsselung und die Entschlüsselung können auch in dem Schaltkreis C auf der Chipkarte CK erfolgen.

Die Überprüfung der Chipkarte Ck durch eine in der Prüfstufe PZ vorhandene Sperrdatei erfolgt nicht bei jeder Benutzung der Chipkarte, sondern immer erst dann, wenn der vorgegebene Übertragungswert W überschritten wird. Dieser Übertragungswert W kann einem bestimmten Geldbetrag zugeordnet sein. Er kann auch einer bestimmten Zeitdauer und/oder einer bestimmten Anzahl von Benutzungen zugeordnet sein, so daß z.B. eine Chipkarte CK zuerst nach Erreichen eines vorgegebenen Geldbetrags in der Sperrdatei überprüft wird und dann durch die Datensignale D5 bis D7 eine Kennung erhält, daß nach Ablauf einer bestimmten Zeit oder nach einer bestimmten Anzahl von Buchungen erneut geprüft wird. Der Übertragungswert W kann sich auch in einem bestimmten Bereich bewegen und muß nicht auf ernen bestimmten Betrag festgelegt sein.

Die erneute Verfügbarkeit über einen bestimmten Geldbetrag kann auch davon abhängig gemacht werden, daß sie durch den Benutzer quittiert wird. Der Benutzer muß in diesem Fall über das Endgerät E eine Quittierung eingeben, die einer elektronischen Unterschrift entspricht und die erneute Verfügbarkeit über den Geldbetrag wird nur dann in der Sperrdatei freigegeben, wenn der Benutzer diese elektronische Unterschrift geleistet hat.

Bezugszeichenliste

CK Chipkarte

C Schaltkreis

E Endgerät

LE Leseeinheit

D1 bis D7 Datensignale

PE, PZ Prüfstufen

W Übertragungswert

SE, SZ Schlüsselgeräte

FL Fernleitung

Z Zentralstelle

## Ansprüche

1. Verfahren zum Überprüfen von Chipkarten, bei dem mittels einer in einem Endgerät vorgesehenen Leseeinheit Daten von der Chipkarte gelesen und auf dieser eingespeichert werden, bei dem die Daten zwischen dem Endgerät und einer Zentralstelle übertragen werden und bei der die Chipkarte nach der Überprüfung in der Zentralstelle gesperrt werden kann, **dadurch gekennzeichnet**, daß von dem Endgerät (E) die für die Überprüfung erforderlichen Daten erst dann zur Zentralstelle (Z) übertragen werden, wenn ein vorgegebener Übertragungswert (W) bei der Benutzung der Chipkarte (CK) überschritten wird und daß die Chipkarte (CK) gesperrt wird, falls der Übertragungswert (W) überschritten wird.

2. Verfahren nach Anspruch 1, **dadurch gekennzeichnet**, daß auf der Chipkarte (CK) die Verfügbarkeit über den vollen vorgegebenen Übertragungswert (W) eingespeichert wird, falls die Chipkarte (CK) nicht gesperrt wird.

3. Verfahren nach Anspruch 1 oder Anspruch 2, **dadurch gekennzeichnet**, daß der vorgegebene Übertragungswert (W) einem bestimmten Geldbetrag zugeordnet ist.

4. Verfahren nach Anspruch 1 oder Anspruch 2, **dadurch gekennzeichnet**, daß der vorgegebene Übertragungswert (W) einer bestimmten Zeitdauer und/oder einer bestimmten Anzahl von Benutzungen zugeordnet ist.

5. Verfahren nach einem der Ansprüche 1 bis 4, **dadurch gekennzeichnet**, daß der vorgegebene Übertragungswert (W) einem bestimmten Bereich zugeordnet ist.

6. Verfahren nach einem der Ansprüche 1 bis 5, **dadurch gekennzeichnet** , daß auf der Chipkarte (CK) die erneute Verfügbarkeit über den vollen vorgegebenen Übertragungswert (W) erst nach der Quittierung durch den Benutzer eingespeichert wird.

7. Verfahren nach einem der Ansprüche 1 bis 6, **dadurch gekennzeichnet**, daß die Übertragung der Daten zwischen der Chipkarte (CK) und der Zentralstelle (Z) verschlüsselt erfolgt.

8. Verfahren nach einem der Ansprüche 1 bis 7, **dadurch gekennzeichnet**, daß die Art des vorgegebenen Übertragungswerts (W) sich nach einer Überprüfung in der Sperrdatei der Zentralstelle (Z) ändert.

9. Anordnung zur Durchführung des Verfahrens nach Anspruch 1, **dadurch gekennzeichnet**, daß im Endgerät (E) eine erste Prüfstufe (PE) vorgesehen ist, die nach dem Überschreiten des vorgegebenen Übertragungswerts (W)Daten von der Chipkarte (CK) zu einer zweiten Prüfstufe (PZ) in der Zentralstelle (Z) überträgt, die die Berechtigung der Benutzung der Chipkarte (CK) unter Verwendung einer Sperrdatei überprüft und die über das Endgerät (E) die Chipkarte (CK) sperrt, wenn der vorgegebene Übertragungswert (W) überschritten wurde.

10. Anordnung nach Anspruch 9, **dadurch gekennzeichnet**, daß sowohl in der Zentralstelle (Z) als auch in dem Endgerät (E) Schlüsselgeräte (SZ bzw. SE) vorgesehen sind, die die übertragenen Daten verschlüsseln und entschlüsseln.

Z
E
CK

LE

C

D7 ↑    ↓D1

PZ    D5 →    SZ    FL    D6 →    SE    W
      ← D4                 ← D3          D2    PE